# EUROPEAN PATENT APPLICATION

(11) **EP 2 601 831 A2**
(43) Date of publication of application: **12.06.2013**
(21) Application number: 12191380.0
(22) Date of filing: 06.11.2012
(51) Int. Cl.: A01K 1/00, A01K 1/02

(54) **A programmable heater unit and a wireless communication system for use in animal stables**

(30) Priority: 09.12.2011 DK 201100959
(71) Applicant: Animal Care ApS, 8210 Aarhus V (DK)
(72) Inventor: Nielsen, Per, 6950 Ringkøbing (DK)
(74) Representative: Carlsen, Bjarne

(57) **Abstract**

An elongated programmable heater unit for use in animal stables is disclosed, said heater unit comprising an elongated heating element (07) and an elongated reflector (06) for distribution of heat radiation from the heating element over a certain predefined area, such as the interior of a cave for piglets, so that a substantially uniform temperature may be obtained in said area. Furthermore, a wireless communication system (08, 15-20) for use in animal stables is disclosed, which system is arranged to be capable of communicating wirelessly, for instance via the Internet, with well-known communication devices, such as personal computers, handheld devices, smartphones and the like, and further arranged to be capable of radio communication over short distances with other systems or equipment, such as sensors (14), in the animal stable using well-known communication protocols, such as Bluetooth.

## Description

The present invention relates to a programmable heater unit for use, for instance, in piglet caves or other local areas of animal stables and to a wireless communication system for animal stables, which may be configured as an integrated part of such a programmable heater.

### Background of the invention

Most of the known heater units to be used in local areas of animal stables, such as for instance in a piglet cave, are constructed in a way so that the heat is basically radiated from one point. This means that the heat is very unevenly distributed through-out the area to be covered by the heater units. This means that the amount of heat received by the individual animals within this area varies a lot and is almost impossible to control. Furthermore, the heating effect radiated by most of the known heater units is not controllable apart from the possibility of manually switching the unit on or off.

### Brief description of the invention

It is an object of the present invention to provide a heater unit without the above-described disadvantages.

The present invention relates to an elongated programmable heater unit for use in animal stables, said heater unit comprising an elongated heating element and an elongated reflector for distribution of heat radiation from the heating element over a certain predefined area, such as the interior of a cave for piglets, so that a substantially uniform temperature may be obtained in said area.

The uniform temperature obtained by using a programmable heater unit with such a construction allows for a much better control and regulation of the heat supplied for individual animals than is the case with heater units known in the art.

In an embodiment of the invention, the reflector is asymmetric.

Making the reflector asymmetric makes it possible to produce a uniform heat through-out an area by means of a heater unit placed at one side thereof, such as for instance over the entrance of a piglet cave.

In an embodiment of the invention, the heater unit further comprises an insulating layer on the backside of the reflector facing away from the heating element, so that the temperature on the surface of the programmable heater unit facing away from the heating element may be kept below 40° C, preferably below 30 °C, when the heating element is switched on.

In an embodiment of the invention, the insulating layer comprises mineral wool.

Insulation of the backside of the reflector is advantageous for at least two reasons.

Firstly, less heat energy is distributed to parts of the animal stable not intended to be heated by the heater unit. Such excessive heat distribution in the stable typically must be removed through increased ventilation, resulting in an increased consumption of energy.

Secondly, the insulation makes it possible to touch and handle the heater unit, while it is in use, without any risk of burnings or other injuries due to a very hot outer surface of the heater unit.

In an embodiment of the invention, the length of the heating element and/or the length of the reflector exceed 50%, preferably 60%, most preferred 70%, of the total length of the programmable heater unit.

The longer the heating element and/or reflector, the more uniform heat distribution can be obtained.

In an embodiment of the invention, the heating element comprises a ceramic tube and a hot wire arranged within the ceramic tube.

This type of heating elements is characterized by having a high energy efficiency.

In an embodiment of the invention, the extension of the hot wire is shorter than the extension of the ceramic tube so that the ends of the ceramic tube may be kept below 40° C, preferably below 30 °C, when the heating element is switched on.

This means that the ceramic tube can be handled by hand without having to wait for it to cool off after use.

In an embodiment of the invention, the heater unit further comprises a room temperature sensor and wherein the heating effect of the heating element may be controlled taking into account an actual room temperature in the area being heated by the heater unit.

By taking external adjustment factors, such as the actual room temperature, into consideration, the energy consumption can be reduced substantially as compared to other heater units known in the art.

In an embodiment of the invention, the heating effect of the heating element may be controlled over time according to predefined curves depending on the kind and properties of the animals for whom the heater unit is meant to be used.

In an embodiment of the invention, the properties of the animals include the age of the animals and/or empirical growth curves for this specific kind of animals.

A substantially better effect of the heating is obtained, when the heating effect and the time-pattern of the heating is tailored to the animals actually being heated.

In an embodiment of the invention, the heater unit is arranged as a plug-and-play unit being fully functioning and operable as soon as it has been connected to a suitable power supply.

The use of a plug-and-play concept substantially reduces the workload and complexity of installing and relocating the programmable heater unit.

In an embodiment of the invention, the heater unit is arranged to be capable of emitting an alarm signal if the programmed heating conditions cannot be obtained.

In an embodiment of the invention, the heater unit is arranged to be capable of communicating wirelessly, for instance via the Internet, with an operator, so that the heater unit is accessible from well-known communication devices, such as personal computers, handheld devices, smartphones and the like.

The use of wireless communication reduces the costs for fixed installations substantially. For instance, the number of cables used for installing the heater may be reduced significantly.

The term 'operator' is to be understood as any person or electronic device, such as a computer, which is able to communicate with and perform control and regulation functions with respect to the programmable heater unit.

In an embodiment of the invention, the heater unit is arranged to be capable of communicating with similar heater units within the same animal stable, either via the Internet or through radio communication over short distances using well-known communication protocols, such as Bluetooth.

Such internal communication between different heater units results in an increased stability of the communication system, for instance because a heater unit which, for some reason, is not able to obtain connection directly to the router, may obtain the connection through another heater unit instead.

In an embodiment of the invention, the heater unit is arranged to be capable of transmitting a command signal to external systems, which are capable of changing the physical conditions in and around the area being heated by the heater unit, such as the distance between the heater unit and animals in the area being heated or the size of a physical opening between an enclosed heated area and the surroundings.

If the programmed heating conditions cannot be obtained, or if energy can be saved, it is advantageous that the programmable heater unit is capable of causing other systems in and/or around the animal stable to change the physical conditions, for instance by lowering or elevating the heater unit or by opening a lid of a piglet cave more or less.

In an embodiment of the invention, the heater unit further comprises one or more LED lamps, which are arranged to be capable of supplying light for inspection of animals in the area being heated and/or for providing information, such as acknowledgment signals, in-service signals and the like.

The use of LED lamps reduces the energy costs for lighting and enables for simple indication of the status and functionality of the programmable heater unit.

In an embodiment of the invention, the heater unit further comprises one or more cameras for remote inspection of animals in the area being heated or inspection of the nearby surroundings.

In an embodiment of the invention, the heater unit further comprises one or more sensors arranged to monitor different aspects of the indoor climate in the animal stable, such as the level of draught in the animal stable or the contents of CO₂ or the humidity level in the air within the stable.

In an embodiment of the invention, the heater unit further comprises one or more infrared sensors arranged to monitor the temperature of the floor in the stable.

In an embodiment of the invention, the heater unit further comprises one or more infrared sensors arranged to monitor the surface temperature of an animal, such as a sow.

In an embodiment of the invention, the heater unit is further arranged to be capable of emitting one or more different sound signals, for instance for alarm purposes or other signalling purposes.

In an aspect of the invention, it relates to the use of a programmable heater as described above for warming suckling pigs and piglets.

In an aspect of the invention, it relates to the use of a programmable heater as described above for warming diseased animals and/or poikilothermic animals, for instance in a veterinary clinic.

Programmable heater units according to the invention are especially well-suited for use with animals needing raised temperature surroundings.

In an aspect of the invention, it relates to a wireless communication system for use in animal stables, which system is arranged to be capable of communicating wirelessly, for instance via the Internet, with well-known communication devices, such as personal computers, handheld devices, smartphones and the like, and further arranged to be capable of radio communication over short distances with other systems or equipment, such as sensors, in the animal stable using well-known communication protocols, such as Bluetooth.

In an embodiment of the invention, the wireless communication system is arranged to be capable of collecting data from other systems or equipment, such as sensors, in the animal stable and forward these data to external operators and/or to receive commands from external operators and forward these commands to the respective systems or equipment, such as sensors, in the animal stable.

In an embodiment of the invention, the wireless communication system is integrated in a programmable heater unit as described above.

Great synergy can be obtained by enabling different stable control systems and sensors to communicate with each other. For instance, situations can be avoided, where one system creates unnecessary heat energy, which a ventilation system has to use excessive energy to remove from the stable again.

### Figures

In the following, a few embodiments of the invention are described and explained in more detail with reference to the figures, of which
- Fig. 01: is an exploded view of a programmable heater unit according to an embodiment of the invention,

- Fig. 02: is a perspective view from the bottom up of an assembled programmable heater unit according to an embodiment of the invention,
- Fig. 03: is a perspective view of a programmable heater unit according to an embodiment of the invention mounted in the roof part of a cave for suckling piglets to be used as a piglet heater, and
- Fig. 04: schematically illustrates a wireless communication system arranged for controlling and monitoring a plurality of programmable heater units according to one or more embodiments of the invention.

### Detailed description

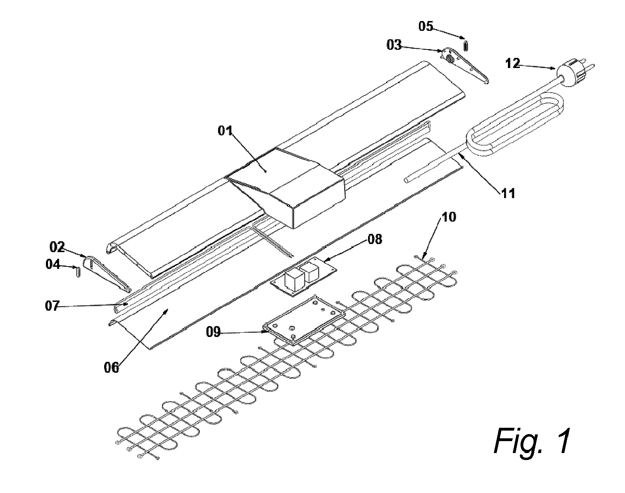

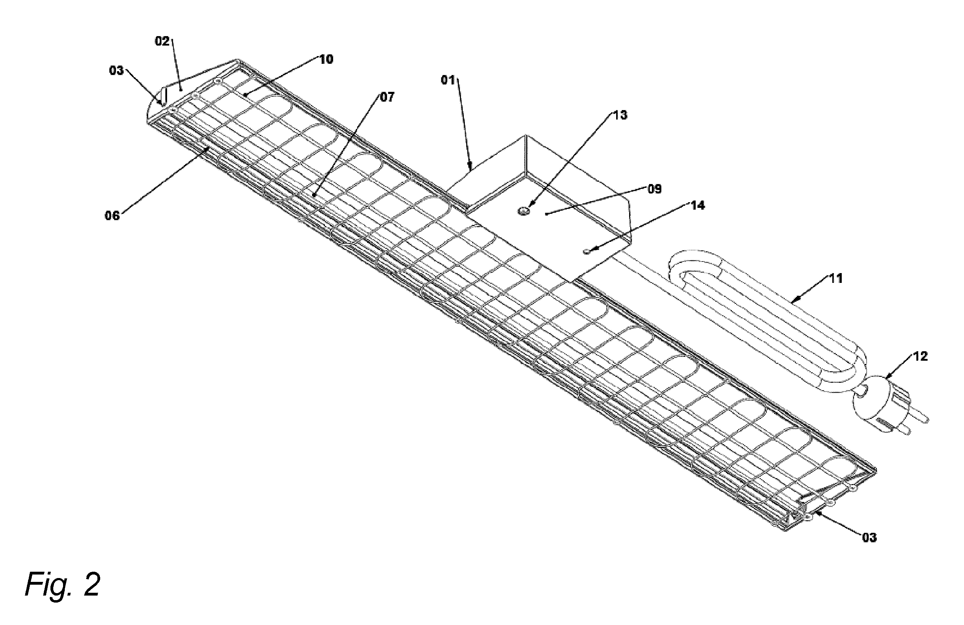

A programmable heater unit according to an embodiment of the invention is shown in Fig. 01 as an exploded view seen from the above. The embodiment illustrated in Fig. 01 comprises an enclosure consisting of a housing 01, a left gable 02 and a right gable 03, a left cable lid 04 and a right cable lid 05, a control chamber (not visible in the figure) and a control chamber lid 09. The housing 01 of the embodiment shown in Fig. 01 and 02 is of a basically rectangular shape. In other embodiments, however, the housing 01 can be square, circular or oval or it can have other shapes. Furthermore, other embodiments of the housing 01 can be designed without gables 02, 03, cable lids 04, 05 and/or a control chamber lid 09.

Insulation material (not shown) is located inside the housing 01 over a reflector 06, which is arranged therein. The reflector 06 can be attached to the housing 01 in a variety of ways, for instance by gluing. Likewise, the right 03 and left gables 02 may be attached to the housing 01 by means of heat resistant glue or by other methods so that an enclosure is obtained, the tightness of which at least fulfill the IP54 tightness requirements of the CE standard or other relevant country standards.

The illustrated reflector 06 is asymmetric, but in other embodiments it can be symmetric and/or take other shapes corresponding to the shape of the housing 01 or shapes that do not follow the shape of the housing 01.

One or more heating elements 07 can be fixed in sockets in the right 03 and left gables 02 or they can be fixed in the housing 01 using other means, such as hanger(s), chain(s) and/or cable(s). The use of a plurality of heating elements 07 allows for obtaining a given set temperature within a shorter time, thereby saving energy. Furthermore, it means that, in case of malfunction of a heating element 07, there is at least one spare heating element 07.

A control unit 08 is located in a control chamber within the housing 01 and a control chamber lid 09 is glued, screwed, riveted, friction fixed, clip fixed, welded or otherwise fixed to the housing 01. By using O-ring(s), gasket(s), tight tolerance fit(s), welding or other suitable means, it is ensured that a resulting enclosure is obtained having a tightness at least fulfilling the IP54 requirements of the CE standard or other relevant country standards.

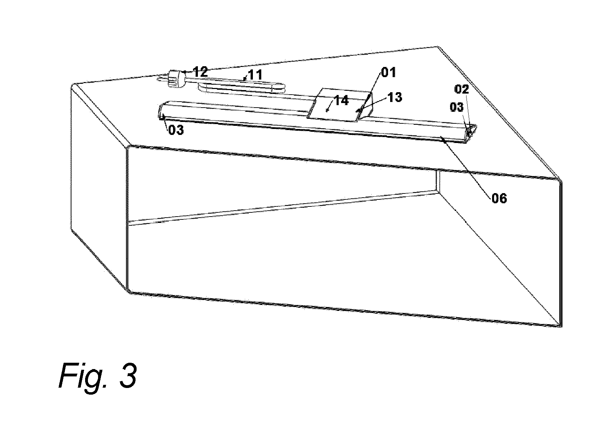

A wire mesh 10 is arranged under the heating element 07 in order to avoid that animals or people by accident come in contact with the heating element 7. This is an important safety precaution, because the heating element 07 can reach temperatures of 230 °C or more when in use. The wire mesh 10 can be fixed to the underside of the housing 01 and the right 08 and left gables 02 by means of conventional fixing means or it can be located on and, optionally, be fixed to a piglet cave housing as the one illustrated in Fig. 03, for instance by being integrated in an adopter unit fixed to the cave housing. The wire mesh 10 can also be hanging from a ceiling or it can be free- or fixed-stand carried.

Furthermore, Fig. 01 shows how electric energy for operating the heater unit can be supplied through a normal power cable 11, the length of which may vary according to convenience and practical conditions. This power cable 11 may be inserted into the control chamber through an IP54 gland or another opening with tight tolerance and/or it may be mechanically fixed and pull relieved inside or outside the control chamber.

The programmable heater unit may be connected to the local power supply installations through a power connection plug 12 or a through a fixed connection in a junction box. Preferably, such a connection should also at least have a tightness fulfilling the IP54 requirements of the CE standard or other relevant country standards.

The same heater unit embodiment as illustrated in an exploded view in Fig. 01 is illustrated as an assembly in a perspective view as seen from the bottom up in Fig. 02. This figure also shows a LED light 13 and a temperature sensor 14 mounted in the control chamber lid 09 and being connected to the control unit 08 located behind the lid 09. Light-penetrable windows in the control chamber lid 09 give access to the surroundings. In other embodiments, LED lights or other light sources and a variety of different types of sensors including one or more cameras can be mounted at different positions inside or outside the control chamber and/or the housing 01. However, measures must be taken to maintain the above-described tightness of the enclosure.

In Fig. 3, the same heater unit embodiment is illustrated when mounted in the roof part of a piglet cave near the entrance thereof for being used as a piglet heater for suckling piglets.

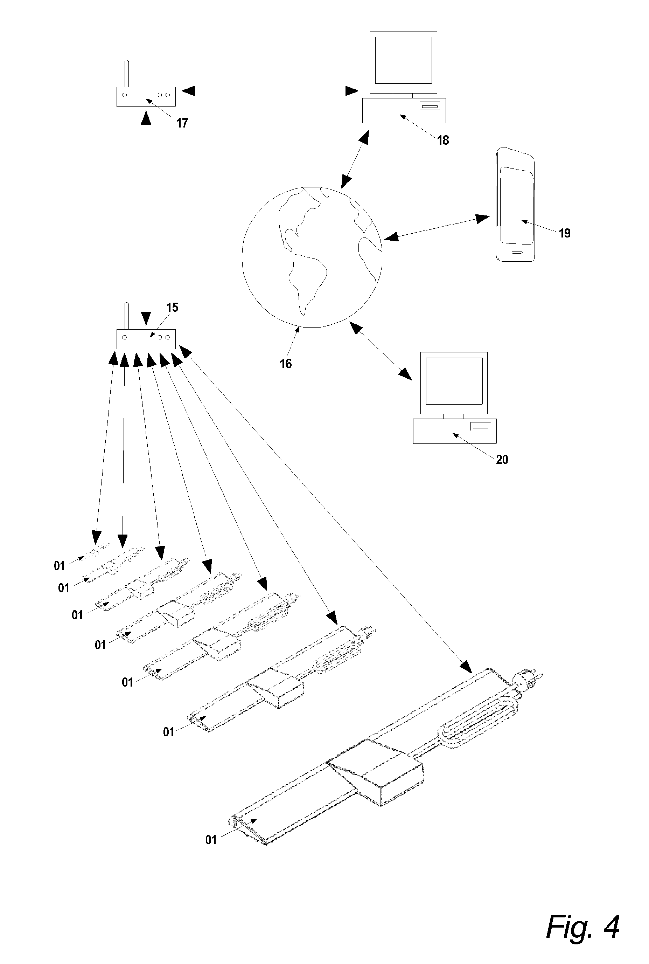

Fig. 04 schematically illustrates an embodiment of a wireless communication system arranged for controlling and monitoring a plurality of programmable heater units according to the invention. Among other aspects, it illustrates how a non-specified quantity of heater units may be installed and controlled by the same communication system. Obviously, such installations are not limited to pig breeding barns but can also be used in other contexts, such as for other animals than pigs or for plants and/or many other conceivable types of heat tasks.

In the illustrated embodiment of the invention, the communication between the programmable heaters and the wireless router 15 can follow any suitable wireless net protocol, such as GSM/WCDME/G3, Bluetooth, Wi-Fi or ZigBee. The wireless router 15 is used for accessing the Internet 16 through a wireless LAN router 17 and a first computer 18 operated by a first user of the system. The connection between the wireless router 15 and the first computer 18 can be wired or it can use a wireless LAN connection optionally including one or more wireless repeaters (not shown). The software controlling the programmable heater unit may be located anywhere in the communication system illustrated in Fig. 04.

Through the Internet 16 remote users using equipment such as a smartphone 19 or a second computer 20 may use the wireless communication system to access, monitor and/or control the one or more heater units connected to the system.

Preferably, the programmable heater unit can be designed for raising and maintaining floor and surrounding temperatures in a cave for new born and/or sick animals in general and/or for suckling pigs and/or piglets in particular.

### List of reference numbers

- 01.: Housing
- 02.: Left gable
- 03.: Right gable
- 04.: Left cable lid
- 05.: Right cable lid
- 06.: Reflector
- 07.: Heating element
- 08.: Control unit
- 09.: Control chamber lid
- 10.: Wire mesh
- 11.: Power cable
- 12.: Power connection plug
- 13.: LED light
- 14.: Temperature sensor
- 15.: Wireless router
- 16.: The Internet
- 17.: Wireless LAN router
- 18.: First computer operated by first user
- 19.: Smartphone operated by remote user
- 20.: Second computer operated by remote user

## Claims

1. An elongated programmable heater unit for use in animal stables, said heater unit comprising an elongated heating element (07) and an elongated reflector (06) for distribution of heat radiation from the heating element over a certain predefined area, such as the interior of a cave for piglets, so that a substantially uniform temperature may be obtained in said area.

2. A programmable heater unit according to claim 1, wherein the reflector is asymmetric.

3. A programmable heater unit according to claim 1 or 2, further comprising an insulating layer on the backside of the reflector facing away from the heating element, so that the temperature on the surface of the programmable heater unit facing away from the heating element may be kept below 40° C, preferably below 30 °C, when the heating element is switched on.

4. A programmable heater unit according to any of the preceding claims, wherein the length of the heating element and/or the length of the reflector exceed 50%, preferably 60%, most preferred 70%, of the total length of the programmable heater unit.

5. A programmable heater unit according to any of the preceding claims, wherein the heating element comprises a ceramic tube and a hot wire arranged within the ceramic tube.

6. A programmable heater unit according to any of the preceding claims, further comprising a room temperature sensor (14) and wherein the heating effect of the heating element may be controlled taking into account an actual room temperature in the area being heated by the heater unit.

7. A programmable heater unit according to any of the preceding claims, wherein the heating effect of the heating element may be controlled over time according to predefined curves depending on the kind and properties of the animals for whom the heater unit is meant to be used.

8. A programmable heater unit according to claim 7, wherein the properties of the animals include the age of the animals and/or empirical growth curves for this specific kind of animals.

9. A programmable heater unit according to any of the preceding claims, which is arranged as a plug-and-play unit being fully functioning and operable as soon as it has been connected to a suitable power supply.

10. A programmable heater unit according to any of the preceding claims, which is arranged to be capable of communicating wirelessly, for instance via the Internet (16), with an operator, so that the heater unit is accessible from well-known communication devices, such as personal computers (18, 20), handheld devices, smartphones (19) and the like.

11. A programmable heater unit according to any of the preceding claims, which is arranged to be capable of communicating with similar heater units within the same animal stable, either via the Internet or through radio communication over short distances using well-known communication protocols, such as Bluetooth.

12. Use of a programmable heater according to any of the preceding claims for warming suckling pigs and piglets.

13. A wireless communication system (08, 15-20) for use in animal stables, which system is arranged to be capable of communicating wirelessly, for instance via the Internet, with well-known communication devices, such as personal computers (18, 20), handheld devices, smartphones (19) and the like, and further arranged to be capable of radio communication over short distances with other systems or equipment, such as sensors, in the animal stable using well-known communication protocols, such as Bluetooth.

14. A wireless communication system according to claim 13, which is arranged to be capable of collecting data from other systems or equipment, such as sensors (14), in the animal stable and forward these data to external operators and/or to receive commands from external operators and forward these commands to the respective systems or equipment, such as sensors, in the animal stable.

15. A wireless communication system according to claim 13 or 14, which is integrated in a programmable heater unit according to any of claims 1-11.
